# EUROPEAN PATENT APPLICATION

(11) **EP 4 693 752 A1**
(43) Date of publication of application: **11.02.2026**
(21) Application number: 23929736.9
(22) Date of filing: 17.07.2023
(51) Int. Cl.: H01R 12/71, H01R 24/00

(54) **CONNECTOR ASSEMBLY AND CONNECTING STRUCTURE**

(30) Priority: 31.03.2023 CN 202320703471 U
(71) Applicant: Sungrow Power Supply Co., Ltd., Hefei, Anhui 230088 (CN)
(72) Inventor: TANG, Dahai, Hefei, Anhui 230088 (CN); KE, Zhiqiang, Hefei, Anhui 230088 (CN); XU, Chao, Hefei, Anhui 230088 (CN)
(74) Representative: Biallo, Dario
(86) International application number: PCT/CN2023/107672
(87) International publication number: WO 2024/198159

(57) **Abstract**

Disclosed in the present invention are a connector assembly and a connecting structure. The connector assembly comprises a photovoltaic connector, and a connecting device configured to be fixed to a circuit board and electrically connected to the circuit board, wherein a conductive terminal of the photovoltaic connector is configured to be in plug-in connection with the connecting device. By means of the connector assembly, assembly steps and assembly time required for assembling the photovoltaic connector and the circuit board are reduced, and the installation efficiency of the photovoltaic connector and the circuit board is improved; the probability of problems such as connection failure and poor contact is also reduced, such that the reliability of connection between the photovoltaic connector and the circuit board is improved; connecting points of the whole connecting loop are also reduced, such that the contact resistance and heat generation of the whole connecting structure are reduced, and large current transmission can be realized, which is beneficial to improving the power generation capacity of a photovoltaic power generation system; and wires can also be omitted, such that the cost of the wires can be saved on, and an internal space of an inverter can be saved on, which facilitates the miniaturization design of the inverter.

## Description

The present application claims the priority to Chinese Patent Application No. 202320703471.3, titled "CONNECTOR ASSEMBLY AND CONNECTING STRUCTURE", filed on March 31, 2023 with the China National Intellectual Property Administration, which is incorporated herein by reference in its entirety.

### FIELD

The present application relates to the technical field of photovoltaic power generation, and in particular, to a connector assembly and a connecting structure.

### BACKGROUND

In a photovoltaic power generation system, electric energy generated by photovoltaic modules is transmitted to an inverter through photovoltaic connectors. The photovoltaic connectors are electrically connected to a circuit board of the inverter via cables, and cold-pressed terminals are required for connection between the cables and the circuit board.

With the increase of power density of the product, there're more and more photovoltaic connectors on the direct current side of the inverter, and the number of cables increases too. Due to the small operation space inside the product and the small bending range of the cables, the mounting steps of the photovoltaic connectors and the circuit board are complex, resulting in low mounting efficiency.

In addition, the cables are disorganized and prone to the problems such as connection failure and poor contact. The entire connection circuit has multiple contact points, resulting in high contact resistance and significant heat generation.

In summary, a technical issue to be addressed by those skilled in the art is to provide an electrical connection between the photovoltaic connector and the circuit board to simplify the mounting of the photovoltaic connector and the circuit board, so as to improve the mounting efficiency of the photovoltaic connector and the circuit board.

### SUMMARY

In view of this, an object of the present application is to provide a connector assembly and a connecting structure to simplify the mounting of the photovoltaic connector and the circuit board, so as to improve the mounting efficiency of the photovoltaic connector and the circuit board.

To achieve the above object, the present application provides the following technical solutions.

A connector assembly includes a photovoltaic connector and a connecting device being configured to be fixed on a circuit board and electrically connected to the circuit board.

The photovoltaic connector has a conductive terminal for plug-in connection with the connecting device.

Optionally, the photovoltaic connector has a housing, the conductive terminal is also configured for plug-in connection with the housing, and a plug-in direction of the plug-in connection between the conductive terminal and the housing is the same as that of the plug-in connection between the conductive terminal and the connecting device.

Optionally, the plug-in direction is configured perpendicular to a board surface of the circuit board.

Optionally, a length direction of the housing is the same as that of the conductive terminal, and both the length direction of the housing and the length direction of the conductive terminal are configured perpendicular to the board surface of the circuit board.

Optionally, the connecting device is configured to run through the circuit board, and the conductive terminal is configured to run through the connecting device.

Optionally, the conductive terminal is configured to be inserted into the connecting device and the housing in sequence from an end of the connecting device away from the housing, and the conductive terminal is configured to be inserted into the connecting device and the housing in sequence from an end of the connecting device away from the housing.

Optionally, the plug-in direction is configured parallel to a board surface of the circuit board.

Optionally, the conductive terminal runs through the connecting device, or the conductive terminal is arranged on one side of the connecting device.

Optionally, the photovoltaic connector has a housing, the conductive terminal is rotatably arranged in the housing, and a rotation axis of the conductive terminal is configured perpendicular to a board surface of the circuit board.

Optionally, the connecting device is configured to run through the circuit board, or the connecting device is configured to be arranged on one side of the circuit board.

Optionally, the connecting device includes a connecting device body and a flange provided on an outer wall of the connecting device body, the flange is configured to be fixed on and electrically connected to the circuit board, and the connecting device body is configured to be in plug-in connection with the conductive terminal; and/or,
the connecting device is configured to be directly electrically connected to the circuit board; and/or,
the connecting device is configured to be welded, crimped or riveted on the circuit board.

Optionally, one of the connecting device and the conductive terminal is provided with an insertion hole, and the other one of the connecting device and the conductive terminal is inserted into the insertion hole.

Optionally, the connector assembly further includes an elastic element which is arranged in the insertion hole and conductive, and the elastic element is configured for connecting the conductive terminal to the connecting device.

Optionally, the elastic element is arranged between an inner wall of the insertion hole and the other one of the connecting device and the conductive terminal which is located in the insertion hole.

Optionally, the elastic element is a crown spring.

Optionally, the conductive terminal and the connecting device are coupled to each other in a rotatable manner, or, the conductive terminal and the connecting device are fixedly connected to each other.

Optionally, the connector assembly further includes a temperature sensor configured to detect a temperature of the conductive terminal and/or a temperature of the connecting device.

Optionally, the connector assembly further includes a controller connected to the temperature sensor and configured to send an alarm signal.

Based on the above connector assembly, a connecting structure is further provided according to the present application. The connecting structure includes a cabinet, a circuit board arranged inside the cabinet, and the connector assembly according to any one of the above solutions.

Optionally, the circuit board is parallel or perpendicular to a cabinet front plate of the cabinet.

In the connector assembly provided by the present application, the connecting device is configured to be fixed on the circuit board and electrically connected to the circuit board, and the conductive terminal of the photovoltaic connector is configured to be in plug-in connection with the connecting device. With the above arrangement, in the actual mounting process, it is simply needed to fix the connecting device on the circuit board and make the connecting device be electrically connected to the circuit board, and then perform plug-in connection between the conductive terminal of the photovoltaic connector and the connecting device. Compared with the related art where the photovoltaic connector is connected to the circuit board via a cable and a cold-pressed terminal is required for connection between the cable and the circuit board, the arrangement in the present application significantly reduces assembly steps and labor time for assembling the photovoltaic connectors and the circuit board, simplifies the installation between the photovoltaic connectors and the circuit board, thereby improving overall installation efficiency the photovoltaic connectors and the circuit board.

In addition, in the connector assembly provided by the present application, the connecting device is electrically connected to the circuit board, and the conductive terminal is in plug-in connection with the connecting device, which reduces the probability of problems such as connection failure and poor contact compared with the related art, and thereby improving the reliability of connection between the photovoltaic connectors and the circuit board. Besides, connecting points of the entire connection circuit are also reduced, such that the contact resistance and heat generation of the whole connecting structure are reduced, and large current transmission can be realized. Moreover, the heat dissipation of the whole machine is also facilitated such that the inverter can operate at full load for a longer time without requiring power derating due to prolonged use, which is beneficial to the increase of the power generation capacity of the photovoltaic power generation system.

With the connector assembly provided by the present application, wires can also be omitted, which reduces the cost of the wires and saves the internal space of the inverter, thereby facilitating the miniaturization design of the inverter.

### BRIEF DESCRIPTION OF THE DRAWINGS

For more clearly illustrating embodiments of the present application or the technical solutions in the related art, drawings referred to describe the embodiments or the related art will be briefly described hereinafter. Apparently, the drawings in the following description are only some examples of the present application, and for those skilled in the art, other drawings may be obtained based on these drawings without any creative efforts.
FIG. 1 is a schematic structural view of a connector assembly being mounted on a cabinet and a circuit board according to an embodiment of the present application;
FIG. 2 is a schematic view showing the connector assembly according to the embodiment of the present application being mounted in a manner;
FIG. 3 is a schematic view showing the connector assembly according to the embodiment of the present application being mounted in another manner;
FIG. 4 is a schematic view showing the structure of a connecting device of a connector assembly according to an embodiment of the present application;
FIG. 5 is a front view of the connecting device of the connector assembly according to the embodiment of the present application;
FIG. 6 is a sectional view taken along line A-A in FIG. 5;
FIG. 7 is a schematic structural view of a connector assembly being mounted on a cabinet and a circuit board according to another embodiment of the present application; and
FIG. 8 is an enlarged schematic view of portion B in FIG. 7.

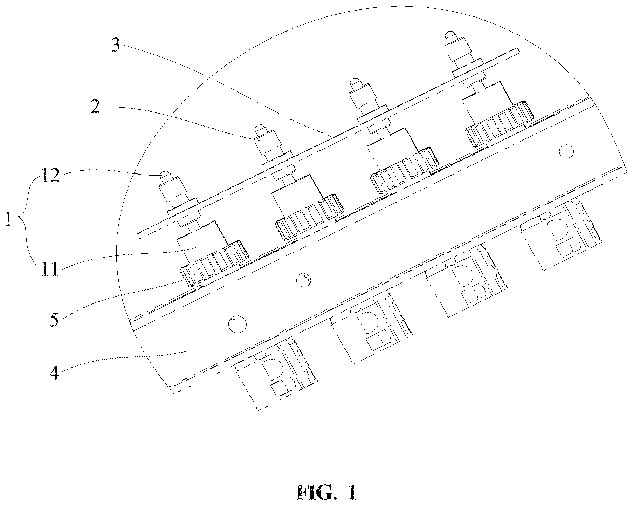

Reference numerals in FIG. 1 to FIG. 8:

| | | | |
|---|---|---|---|
| 1 | photovoltaic connector, | 2 | connecting device, |
| 3 | circuit board, | 4 | cabinet plate, |
| 5 | fixing nut, | 6 | insertion hole, |
| 7 | elastic element, | 11 | housing, |
| 12 | conductive terminal, | 21 | connecting device body, |
| 22 | flange, | 41 | cabinet front plate, |
| 42 | cabinet side plate. | | |

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

Technical solutions according to the embodiments of the present application will be described clearly and completely as follows in conjunction with the accompany drawings in the embodiments of the present application. The terminologies used in the following embodiments are only for the purpose of describing specific embodiments, and are not intended to limit the present application. As used in the specification and appended claims of the present application, the singular expressions "a", "an", "the", "such", "this" and "this one" are intended to also include expressions such as "one or more" unless the context clearly indicates the contrary. It should also be understood that in the embodiment of the present application, the expression "one or more" refers to one, two or more; the expression "and/or" describes an association relationship of related objects and indicates there may be three kinds of relationships, for example, A and/or B may indicate three cases, such as A exists alone, A and B exist at the same time, and B exists alone. In each case, the number of A may be one or more, and the number of B may be one or more. The symbol "/" generally indicates an "or" relationship between the objects it connects.

In this specification, references to "one embodiment" or "some embodiments" and the like mean that a particular feature, structure, or characteristic described in connection with the embodiment is included in one or more embodiments of the present application. Thus, phrases such as "in one embodiment", "in some embodiments", "in other embodiments" and "in yet other embodiments" etc., appearing in different places in this specification do not necessarily all refer to the same embodiment. Rather, they mean "one or more, but not all embodiments" unless otherwise specifically emphasized. The terms "including", "comprising", "having" and their variations all mean "including but not limited to" unless otherwise specifically emphasized.

"Multiple" in the embodiment of the present application refers to two or more. It should be noted that in the description of the embodiments of the present application, words such as "first" and "second" are only used for the purpose of distinguishing descriptions, and cannot be understood as indicating or implying relative importance, nor can they be understood as indicating or implying order.

In this application, "parallel" and "vertical" refer to "substantially parallel" and "substantially vertical" in practical operations. "Substantially parallel" means parallel within a certain margin of error; similarly, "substantially vertical" means vertical within a certain margin of error.

"Plane" involved in the present application refers to "plane substantially parallel to the horizontal plane" in practical operations.

In order to address the issues mentioned in the background art, a connector assembly and a connecting structure are provided according to embodiments of the present application. The connector assembly is configured to be electrically connected to a circuit board, and the connector assembly may be electrically connected to a direct-current input end of the circuit board or an alternating-current output end of the circuit board. The circuit board may be a circuit board of an inverter.

As shown in FIG. 1, FIG. 7 and FIG. 8, the connector assembly in the embodiment of the present application includes a photovoltaic connector 1 and a connecting device 2.

The photovoltaic connector 1 has a conductive terminal 12 configured to be in plug-in connection with the connecting device 2. It can be understood that the plug-in connection realizes the electrical connection between the conductive terminal 12 and the connecting device 2 and the fixed connection in a plug-in direction.

The conductive terminal 12 may be rotatably fitted with or fixedly connected to the connecting device 2. In the case that the conductive terminal 12 is rotatably fitted with the connecting device 2, a rotation axis of the conductive terminal 12 may be parallel to the plug-in direction of the conductive terminal 12 and the connecting device 2, and a rotation axis of the connecting device 2 may be parallel to the plug-in direction of the conductive terminal 12 and the connecting device 2. In the case that the conductive terminal 12 is fixedly connected to the connecting device 2, the conductive terminal 12 and the connecting device 2 cannot move relative to each other.

Of course, the conductive terminal 12 may be connected to the connecting device 2 in other manners, as long as it is ensured that the conductive terminal 12 and the connecting device 2 are electrically connected and are in a fixed connection in the plug-in direction.

The connecting device 2 is configured to be fixed on a circuit board 3 and electrically connected to the circuit board 3. It can be understood that the connecting device 2 is electrically conductive. In some embodiments, in order to simplify the electrical connection between the connecting device 2 and the circuit board 3, the connecting device 2 may be directly electrically connected to the circuit board 3. In this case, the connecting device 2 is configured to be in contact with the circuit board 3 to realize direct electrical connection. Alternatively, the connecting device 2 may be configured to be indirectly electrically connected to the circuit board 3, for example, the connecting device 2 is indirectly electrically connected to the circuit board 3 via a conductive member, which is not limited in this embodiment.

With the above connector assembly, in the actual mounting process, the connecting device 2 is fixed on the circuit board 3 and electrically connected to the circuit board 3, and then the conductive terminal 12 of the photovoltaic connector 1 is in plug-in connection with the connecting device 2. Compared with the related art where the photovoltaic connector is connected to the circuit board via a cable and a cold-pressed terminal is required for connection between the cable and the circuit board, the arrangement in the present application significantly reduces assembly steps and labor time for assembling the photovoltaic connectors 1 and the circuit board 3, simplifies the installation between the photovoltaic connectors 1 and the circuit board 3, thereby improving overall installation efficiency of the photovoltaic connectors 1 and the circuit board 3.

The connecting device 2 is electrically connected to the circuit board 3, and the conductive terminal 12 is electrically connected to the connecting device 2 through plug-in connection, which reduces the probability of problems such as connection failure and poor contact, and thereby improving the reliability of connection between the photovoltaic connector 1 and the circuit board 3. Besides, connecting points of the entire connection circuit are also reduced, such that the contact resistance and heat generation of the whole connecting structure are reduced, and large current transmission can be realized. Moreover, the heat dissipation of the whole machine is also facilitated such that the inverter can operate at full load for a longer time without requiring power derating due to prolonged use, which is beneficial to the increase of the power generation capacity of the photovoltaic power generation system.

With the above connector assembly, wires can also be omitted, which reduces the cost of the wires and saves the internal space of the inverter, thereby facilitating the miniaturization design of the inverter.

In some embodiments, the photovoltaic connector 1 has a housing 11, the conductive terminal 12 is in plug-in connection with the housing 11, and a plug-in direction of the plug-in connection between the conductive terminal 12 and the housing 11 is the same as a plug-in direction of the plug-in connection between the conductive terminal 12 and the connecting device 2. In this way, the assembly of the conductive terminal 12 and the housing 11 and the assembly of the conductive terminal 12 and the connecting device 2 can be performed in the same direction, thereby reducing the space required for assembling the photovoltaic connector 1 and the circuit board 3. Moreover, the conductive terminal 12 is in plug-in connection with the housing 11, that is, the conductive terminal 12 is electrically connected to the housing 11 and fixedly connected to the housing 11 in the plug-in direction through the plug-in connection, thereby simplifying the assembly of the conductive terminal 12 and the housing 11.

In the above embodiment, on one hand, the plug-in direction may be perpendicular to a board surface of the circuit board 3. On the other hand, the plug-in direction may be parallel to the board surface of the circuit board 3.

It should be noted that the board surface of the circuit board 3 is a surface of the circuit board 3 with the largest area.

In some embodiments, in a case that the plug-in direction is perpendicular to the board surface of the circuit board 3, in order to be applicable to a product with a large power density, a length direction of the housing 11 is the same as that of the conductive terminal 12, and the length direction of the housing 11 and the length direction of the conductive terminal 12 are both perpendicular to the board surface of the circuit board 3. It can be understood that the housing 11 is arranged on one side of the circuit board 3. In this way, more photovoltaic connectors 1 can be arranged on the circuit board 3, which is applicable to a product with a large power density.

In the above connector assembly, the connecting device 2 is configured to be arranged on one side of the circuit board 3, or the connecting device 2 is configured to run through the circuit board 3. In order to facilitate the mounting of the connecting device 2 and ensure the electrical connection between the connecting device 2 and the circuit board 3, the case where the connecting device 2 runs through the circuit board 3 may be selected.

In the case that the connecting device 2 is arranged on one side of the circuit board 3, the connecting device 2 may be arranged on one side of the circuit board 3 close to the housing 11, or the other side of the circuit board 3 away from the housing 11.

In the above connector assembly, the conductive terminal 12 runs through the connecting device 2, or the conductive terminal 12 is arranged on one side of the connecting device 2. It can be understood that in the case that the conductive terminal 12 is arranged on one side of the connecting device 2, specifically, the conductive terminal 12 is arranged on one side of the connecting device 2 close to the housing 11.

In some embodiments, in the case that the connecting device 2 is configured to run through the circuit board 3, the conductive terminal 12 is configured to run through the connecting device 2, or the conductive terminal 12 is only configured to be inserted into one end of the connecting device 2 for connection.

In the case where the conductive terminal 12 runs through the connecting device 2, the length of a portion of the conductive terminal 12 that extends beyond the connecting device 2 at the end away from the housing 11 may vary slightly, as long as it is ensured that the conductive terminal 12 penetrates through the connecting device 2. In this way, the mounting of the connecting device 2 and the circuit board 3 can be simplified, the mounting accuracy requirements of the connecting device 2 and the circuit board 3 can be lowered, which reduces the risk that the conductive terminal 12 is not assembled in place due to the mounting tolerance of the connecting device 2 and the circuit board 3, and also improves the reliability of the connection between the conductive terminal 12 and the connecting device 2.

In some embodiments, the plug-in direction of the plug-in connection between the conductive terminal 12 and the housing 11 is the same as that of the plug-in connection between the conductive terminal 12 and the connecting device 2, and the plug-in direction is perpendicular to the board surface of the circuit board 3. A length direction of the housing 11 is the same as that of the conductive terminal 12, and both the length direction of the housing 11 and the length direction of the conductive terminal 12 are perpendicular to the board surface of the circuit board 3. The connecting device 2 is configured to run through the circuit board 3, and the conductive terminal 12 is configured to run through the connecting device 2.

In the above structure, the conductive terminal 12 may be first assembled with the housing 11, and then be assembled with the connecting device 2. Alternatively, the connecting device 2 may be first assembled with the conductive terminal 12, and then the conductive terminal 12 is assembled with the housing 11. In order to simplify mounting and improve the mounting efficiency, the case where the connecting device 2 being first assembled with the conductive terminal 12, and then the conductive terminal 12 being assembled with the housing 11 can be employed. The conductive terminal 12 is inserted into the connecting device 2 and the housing 11 in sequence from an end of the connecting device 2 away from the housing 11. In this way, during the insertion of the conductive terminal 12, the assembling of the conductive terminal 12 and the connecting device 2, and the assembling of the conductive terminal 12 and the housing 11 are sequentially implemented, thereby effectively improving the assembling efficiency.

In the above connector assembly, the housing 11 may be fixed on a cabinet plate 4 of the cabinet, and the circuit board 3 may be fixed inside the cabinet. The cabinet is a cabinet of the inverter. In order to facilitate fixing the housing 11, as shown in FIG. 1, FIG. 7 and FIG. 8, the housing 11 runs through the cabinet plate 4, and the housing 11 is fixed on the cabinet plate 4 through a fixing nut 5. Of course, the housing 11 may be fixed in other manners, which is not limited in this embodiment.

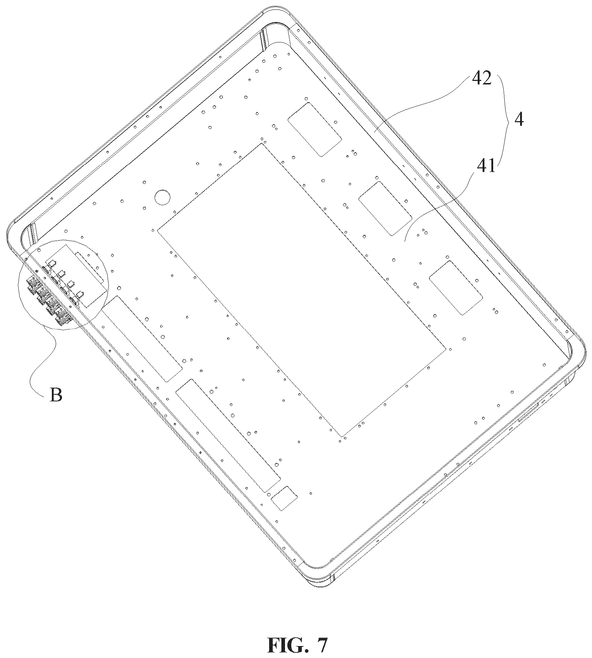

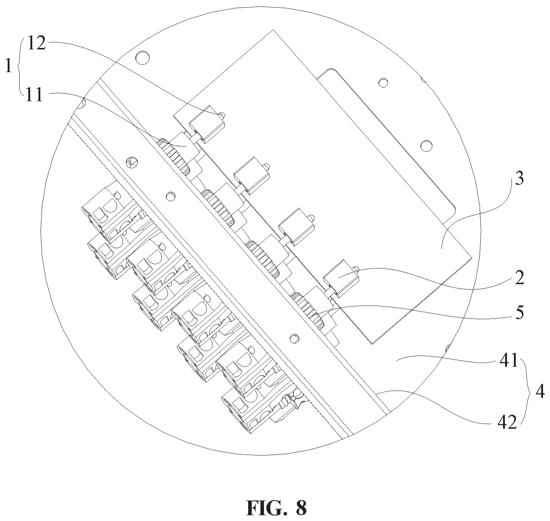

As shown in FIG. 7 and FIG. 8, the cabinet plate 4 includes a cabinet front plate 41 and a cabinet side plate 42 that are fixedly connected to each other. The cabinet side plate 42 is located at a periphery of the cabinet front plate 41. The housing 11 may run through the cabinet side plate 42. In practice, the housing 11 may alternatively run through the cabinet front plate 41.

The cabinet front plate 41 and the cabinet side plate 42 are connected perpendicular to each other or at a relative inclination. In order to facilitate processing and production, the cabinet front plate 41 and the cabinet side plate 42 are connected perpendicular to each other. In practice, an end of the cabinet side plate 42 away from the cabinet front plate 41 may be provided with a flange.

The specific manner for fixing the circuit board 3 inside the cabinet is selected according to the actual situation, which is not limited in this embodiment.

As shown in FIG. 1 to FIG. 3, the circuit board 3 is perpendicular to the cabinet front plate (the cabinet front plate is not labeled in FIG. 1 to FIG. 3), and in this case, the circuit board 3 may be parallel to the cabinet side plate. As shown in FIG. 7 and FIG. 8, the circuit board 3 is parallel to the cabinet front plate 41, and in this case, the circuit board 3 may be perpendicular to the cabinet side plate 42.

In practice, the circuit board 3 and the cabinet plate 4 may be arranged in other relative positional relationships, for example, the circuit board 3 is inclined relative to the cabinet plate 4, which is not limited in this embodiment.

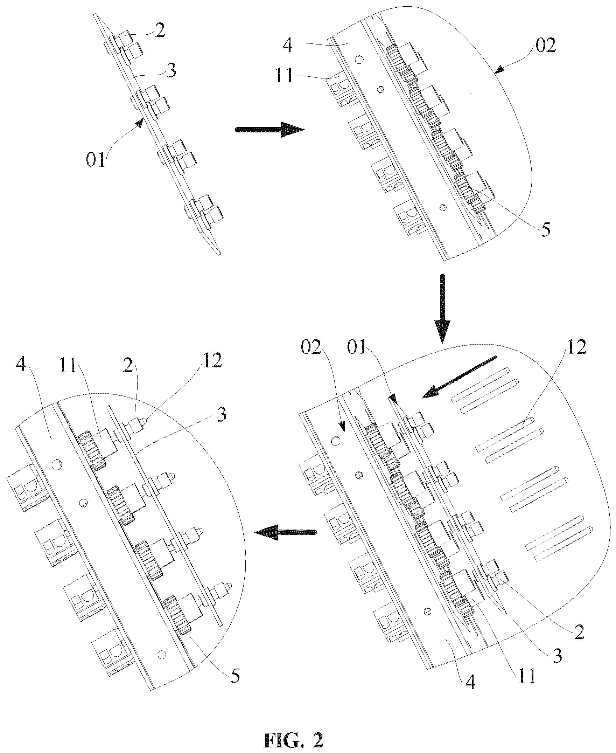

In the actual process of mounting the connector assembly, the mounting sequence shown in FIG. 2 may be selected. As shown in FIG. 2, all the connecting devices 2 are mounted on the circuit board 3 first, then all the housings 11 are mounted on the cabinet plate 4, and then the circuit board 3 with the connecting devices 2 is fixed inside the cabinet; next, one conductive terminal 12 is inserted into the corresponding connecting device 2 and the corresponding housing 11 in sequence from an end of the connecting device 2 away from the housing 11, so that the assembling of the one conductive terminal 12 with the corresponding connecting device 2 and the assembling of the one conductive terminal 12 with the corresponding housing 11 are implemented. The remaining conductive terminals 12 are mounted in sequence through the above mounting method, and the mounting process is completed once all the conductive terminals 12 have been mounted.

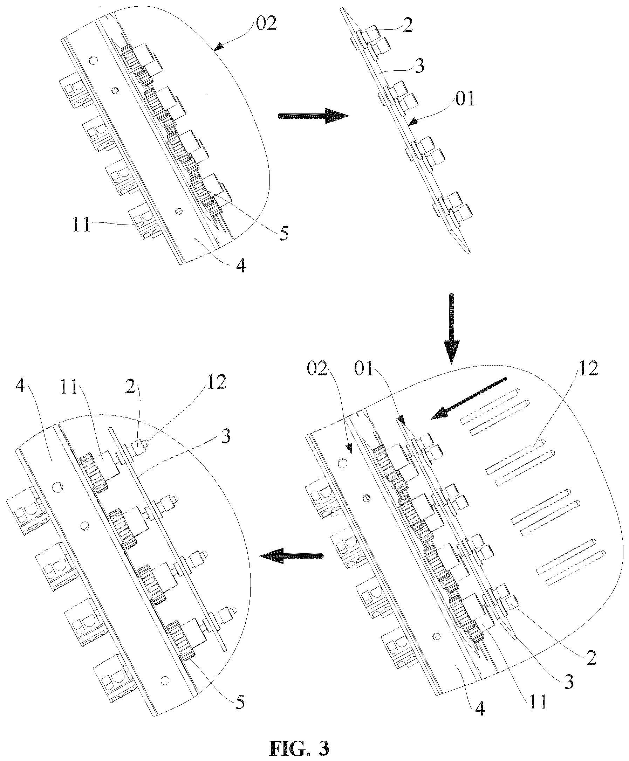

In the actual mounting process, the mounting sequence shown in FIG. 3 may be selected. As shown in FIG. 3, all the housings 11 are mounted on the cabinet plate 4 first, then all the connecting devices 2 are mounted on the circuit board 3, and then the circuit board 3 with the connecting devices 2 is fixed inside the cabinet; next, one conductive terminal 12 is inserted into the corresponding connecting device 2 and the corresponding housing 11 in sequence from an end of the connecting device 2 away from the housing 11, so that the assembling of the one conductive terminal 12 with the corresponding connecting device 2 and the assembling of the one conductive terminal 12 with the corresponding housing 11 are implemented. The remaining conductive terminals 12 are mounted in sequence through the above mounting method, and the mounting process is completed once all the conductive terminals 12 have been mounted.

In practice, other mounting methods may be employed. For example, all the housings 11 are mounted on the cabinet plate 4 and all the connecting devices 2 are mounted on the circuit board 3, then each of the conductive terminals 12 is inserted into its corresponding connecting device 2, and then the circuit board 3 is fixed inside the cabinet. During the fixing of the circuit board 3, each of the conductive terminals 12 is inserted into its corresponding housing 11, such that the mounting is completed.

In some embodiments, in the case that the conductive terminal 12 is only inserted into one end of the connecting device 2, the conductive terminal 12 is only located on one side of the circuit board 3, that is, the conductive terminal 12 is located on the side of the circuit board 3 close to the housing 11. In this case, all the housings 11 are mounted on the cabinet plate 4 and all the connecting devices 2 are mounted on the circuit board 3, then each of the conductive terminals 12 is inserted into its corresponding connecting device 2, and then the circuit board 3 is fixed inside the cabinet. During the fixing of the circuit board 3, each conductive terminal 12 is inserted into its corresponding housing 11, such that the mounting is completed.

Of course, all the housings 11 may be mounted on the cabinet plate 4 first, then each of the conductive terminals 12 is inserted into its corresponding housing 11, then all the connecting devices 2 are mounted on the circuit board 3, and then the circuit board 3 is fixed inside the cabinet. During the fixing of the circuit board 3, each conductive terminal 12 is inserted into its corresponding connecting device 2, such that the mounting is completed. In practice, the connector assembly and the circuit board 3 may be mounted in other mounting methods, which is not limited to those described above.

In some embodiments, in a case that the plug-in direction is parallel to the board surface of the circuit board 3, the length direction of the housing 11 is the same as that of the conductive terminal 12, and both the length direction of the housing 11 and the length direction of the conductive terminal 12 are perpendicular to the board surface of the circuit board 3. In this way, fewer photovoltaic connectors 1 can be arranged on the circuit board 3, which is applicable to the product with a low power density.

In some embodiments, in order to simplify the mounting of the conductive terminal 12, the photovoltaic connector 1 may have the housing 11, the conductive terminal 12 is rotatably arranged in the housing 11, and a rotation axis of the conductive terminal 12 is perpendicular to the board surface of the circuit board 3. This structure is particularly applicable to the case where the length direction of the housing 11 and the length direction of the conductive terminal 12 are both perpendicular to the board surface of the circuit board 3. In this way, during the mounting process, the position of the conductive terminal 12 can be adjusted by rotating the conductive terminal 12 to avoid devices or other components on the circuit board 3, thereby facilitating the mounting of the conductive terminal 12.

The specific structure in which the conductive terminal 12 is rotatably mounted in the housing 11 may be selected as needed, which is not limited in this embodiment.

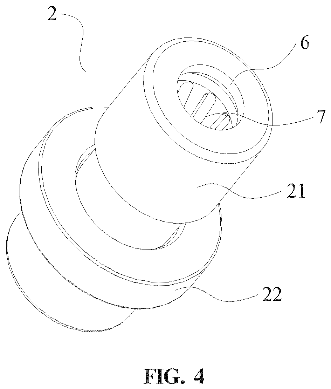

The specific structure of the connecting device 2 is selected as needed. In some embodiments, in order to facilitate the connection between the connecting devices 2 and the circuit board 3, as shown in FIG. 4 to FIG. 6, the connecting device 2 includes a connecting device body 21 and a flange 22 provided on an outer wall of the connecting device body 21. The flange 22 is configured to be fixed on and electrically connected to the circuit board 3, and the connecting device body 21 is configured to be in plug-in connection with the conductive terminal 12.

In a case that the connecting device 2 is configured to run through the circuit board 3, the flange 22 is located between both ends of the connecting device body 21. Thus, the connecting device body 21 is configured to run through the circuit board 3, and the flange 22 is configured to be in contact with the board surface of the circuit board 3, so that the flange 22 is fixedly connected and electrically connected to the circuit board 3.

In a case that the connecting device 2 is arranged on one side of the circuit board 3, the flange 22 is located at one end of the connecting device body 21. Thus, the flange 22 is configured to be in contact with the board surface of the circuit board 3, so that the flange 22 is fixedly connected and electrically connected to the circuit board 3.

Alternatively, the connecting device 2 may be of other structures, which are not limited to the structures shown in FIG. 4 to FIG. 6.

In the connector assembly, the connection method for connecting the connecting device 2 to the circuit board 3 is selected as needed. In some embodiments, in order to simplify the connection between the connecting device 2 and the circuit board 3, the structure for the fixing connection between the connecting device 2 and the circuit board 3 and the structure for the electrical connection between the connecting device 2 and the circuit board 3 may be the same one. That is, the connecting device 2 is electrically connected to the circuit board 3 while being fixedly connected to the circuit board 3.

In the above embodiment, the connecting device 2 may be welded on the circuit board 3. In this way, the connecting device 2 is fixedly connected and electrically connected to the circuit board 3 by welding. Alternatively, the connecting device 2 may be crimped on the circuit board 3, so that the connecting device 2 is fixedly connected and electrically connected to the circuit board 3 by crimping. Alternatively, the connecting device 2 may be riveted on the circuit board 3, so that the connecting device 2 is fixedly connected and electrically connected to the circuit board 3 by riveting.

In practice, the connecting device 2 may be fixedly connected and electrically connected to the circuit board 3 in other manners, which is not limited to the above embodiments.

In some embodiments, in order to facilitate the plug-in connection between the conductive terminal 12 and the connecting device 2, one of the connecting device 2 and the conductive terminal 12 has an insertion hole 6, and the other of the connecting device 2 and the conductive terminal 12 is inserted into the insertion hole 6.

In order to facilitate production and manufacture, as shown in FIG. 4 to FIG. 6, the connecting device 2 has an insertion hole 6, and in this case, the conductive terminal 12 is inserted into the insertion hole 6.

Alternatively, the conductive terminal 12 may have an insertion hole 6, and in this case, the connecting device 2 is inserted into the insertion hole 6, which is not limited to the structure described above.

The plug-in direction of the plug-in connection between the conductive terminal 12 and the connecting device 2 is along an axis of the insertion hole. In a case that the plug-in direction is perpendicular to the board surface of the circuit board 3, the axis of the insertion hole 6 is perpendicular to the board surface of the circuit board 3. In a case that the plug-in direction is parallel to the board surface of the circuit board 3, the axis of the insertion hole 6 is parallel to the board surface of the circuit board 3.

The insertion hole 6 may be a blind hole or a through hole. In a case that the insertion hole 6 is provided in the connecting device 2 and the conductive terminal 12 is configured to run through the connecting device 2, the insertion hole 6 is a through hole. In a case that the insertion hole 6 is provided in the connecting device 2 and the conductive terminal 12 is configured to be arranged on one side of the connecting device 2, the insertion hole 6 may be a blind hole or a through hole. In a case that the insertion hole 6 is provided in the conductive terminal 12 and the connecting device 2 is configured to run through the insertion hole 6, the insertion hole 6 is a through hole. In a case that the insertion hole 6 is provided in the conductive terminal 12 and the connecting device 2 is configured to be arranged on one side of the conductive terminal 12, the insertion hole 6 may be a blind hole or a through hole.

In some other embodiments, the conductive terminal 12 may be in plug-in connection with the connecting device 2 by means of other structures, which is not limited to the insertion hole 6.

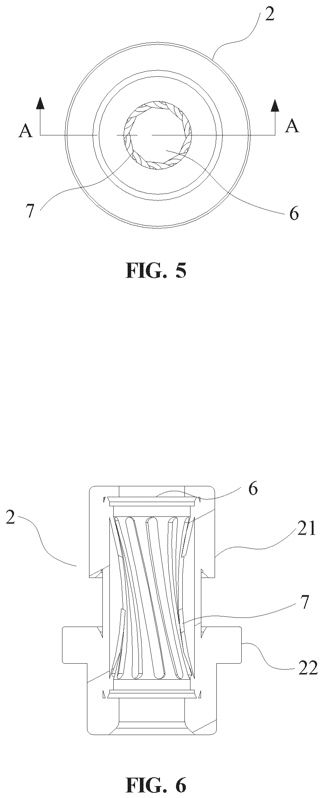

In the above connector assembly, one of the conductive terminal 12 and the connecting device 2 mates with the insertion hole 6 to realize electrical connection and fixed connection in the plug-in direction. In some embodiments, in order to ensure the electrical connection between the conductive terminal 12 and the connecting device 2 as well as the reliability of the fixed connection in the plug-in direction, as shown in FIG. 5 and FIG. 6, the connector assembly further includes an elastic element 7 which is conductive and arranged in the insertion hole 6, and the elastic element 7 is configured to connect the conductive terminal 12 to the connecting device 2. It can be understood that the electrical connection and the fixing connection in the plug-in direction between the conductive terminal 12 and the connecting device 2 are realized through the elastic element 7. In this way, the elastic element 7, which is elastically deformable, compensates for the assembly tolerance between the conductive terminal 12 and the connecting device 2, the tolerance of the conductive terminal 12 itself, and the tolerance of the connecting device 2 itself. This ensures that the elastic connector 7 can stably connect the conductive terminal 12 and the connecting device 2, guaranteeing reliable electrical connection and secure fixation in the plug-in direction.

In order to improve the function of the elastic element 7, the elastic element 7 may be sleeved between an inner wall of the insertion hole 6 and the connecting device 2 or the conductive terminal 12 located in the insertion hole 6. It can be understood that the elastic element 7 is cylindrical. In the case that the conductive terminal 12 is inserted into the insertion hole 6, the elastic element 7 is sleeved between the inner wall of the insertion hole 6 and the conductive terminal 12. In the case that the connecting device 2 is inserted into the insertion hole 6, the elastic element 7 is sleeved between the inner wall of the insertion hole 6 and the connecting device 2.

In the above structure, the specific type of the elastic element 7 is selected as needed. For the convenience of selection, the elastic element 7 may be a crown spring. Alternatively, the elastic element 7 may be other components, which is not limited in this embodiment.

In practice, the elastic element 7 may have other shapes, for example, the elastic element 7 may be embodied as multiple elastic plates being distributed in a circumferential direction of the insertion hole 6 in sequence.

The specific structure of the elastic element 7 is not limited in this embodiment, as long as the elastic element 7 is located between the conductive terminal 12 and the connecting device 2, to ensure the electrical connection and the fixing connection in the plug-in direction between the conductive terminal 12 and the connecting device 2.

In the operation process of the connector assembly, when a temperature of the conductive terminal 12 or a temperature of the connecting device 2 is too high, the photovoltaic connector 1 and the connecting device 2 will be burnt out and fail due to overheating, thereby affecting the operation of the whole machine. In order to facilitate obtaining the operating condition of the connector assembly, the connector assembly further includes a temperature sensor, which is configured to detect a temperature of the conductive terminal 12 and/or a temperature of the connecting device 2. In this way, the temperature of the conductive terminal 12 and the temperature of the connecting device 2 can be obtained, to determine that whether the connection between the photovoltaic connector 1, the connecting device 2 and the circuit board 3 is abnormal, thereby reducing the probability of burnout and failure of the photovoltaic connector 1 and the connecting device 2 due to overheating, and improving product reliability.

In some embodiments, the temperature sensor is configured to detect the temperature of the conductive terminal 12, and the temperature sensor is arranged on the housing 11, the connecting device 2, or the circuit board 3. Alternatively, the temperature sensor may be arranged at other positions, which is not limited in this embodiment.

In some other embodiments, the temperature sensor is configured to detect the temperature of the connecting device 2, and the temperature sensor is arranged on the housing 11, the connecting device 2, or the circuit board 3. Alternatively, the temperature sensor may be arranged at other positions, which is not limited in this embodiment.

In some other embodiments, there are two temperature sensors, one being configured to detect the temperature of the conductive terminal 12, and the other being configured to detect the temperature of the connecting device 2.

The specific type of the temperature sensor is selected as needed, which is not limited in this embodiment.

In order to facilitate user obtaining the operating condition of the connector assembly, the connector assembly further includes a controller, which is connected to the temperature sensor and is configured to send an alarm signal.

The controller is configured to obtain a detection value of the temperature sensor, and when the detection value exceeds a set value, which means the connector assembly is abnormal, the controller sends an alarm signal. The alarm signal may be a sound alarm signal and/or a light alarm signal. Alternatively, the alarm signal may be other signals. For example, the connector assembly further includes an alarm device, which is connected to the controller and configured for alerting. The alarm device is configured to receive an alarm signal from the controller and activate an alarm based on the alarm signal. The alarm device may be a buzzer, an alarm lamp, or the like.

The controller may be arranged on the circuit board 3 or at other positions, depending on actual situations, which is not limited in this embodiment.

Based on the above connector assembly, a connecting structure is provided according to an embodiment of the present application, including a cabinet, a circuit board arranged inside the cabinet, and the connector assembly described in the above embodiments.

Since the connector assembly has the above technical effects, the connecting structure also has corresponding technical effects, which are not described in detail herein.

The relationship among the cabinet, the circuit board 3, the photovoltaic connector 1, and the connecting device 2 may refer to the above description, which is not described in detail herein.

In the above connecting structure, the number of the photovoltaic connector 1 is at least one. When there are at least two photovoltaic connectors 1, any two of the photovoltaic connectors 1 may be the same or different, depending on actual situations, which is not limited in this embodiment.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A connector assembly, comprising:
a photovoltaic connector; and
a connecting device being configured to be fixed on a circuit board and electrically connected to the circuit board, wherein
the photovoltaic connector has a conductive terminal configured for plug-in connection with the connecting device.

2. The connector assembly according to claim 1, wherein the photovoltaic connector has a housing, the conductive terminal is also configured for plug-in connection with the housing, and
a plug-in direction of the plug-in connection between the conductive terminal and the housing is the same as that of the plug-in connection between the conductive terminal and the connecting device.

3. The connector assembly according to claim 2, wherein the plug-in direction is configured perpendicular to a board surface of the circuit board.

4. The connector assembly according to claim 3, wherein a length direction of the housing is the same as that of the conductive terminal, and both the length direction of the housing and the length direction of the conductive terminal are configured perpendicular to the board surface of the circuit board.

5. The connector assembly according to claim 4, wherein the connecting device is configured to run through the circuit board, the conductive terminal is configured to run through the connecting device, and the conductive terminal is configured to be inserted into the connecting device and the housing in sequence from an end of the connecting device away from the housing.

6. The connector assembly according to claim 2, wherein the plug-in direction is configured parallel to a board surface of the circuit board.

7. The connector assembly according to claim 1, wherein
the conductive terminal runs through the connecting device; or,
the conductive terminal is arranged on one side of the connecting device.

8. The connector assembly according to claim 1, wherein the photovoltaic connector has a housing, the conductive terminal is rotatably arranged in the housing, and a rotation axis of the conductive terminal is configured perpendicular to a board surface of the circuit board.

9. The connector assembly according to claim 1, wherein
the connecting device is configured to run through the circuit board; or,
the connecting device is configured to be arranged on one side of the circuit board.

10. The connector assembly according to claim 1, wherein
the connecting device comprises a connecting device body and a flange provided on an outer wall of the connecting device body, the flange is configured to be fixed on and electrically connected to the circuit board, and the connecting device body is configured to be in plug-in connection with the conductive terminal; and/or,
the connecting device is configured to be directly electrically connected to the circuit board; and/or,
the connecting device is configured to be welded, crimped or riveted on the circuit board.

11. The connector assembly according to any one of claims 1 to 10, wherein one of the connecting device and the conductive terminal is provided with an insertion hole, and the other one of the connecting device and the conductive terminal is inserted into the insertion hole.

12. The connector assembly according to claim 11, further comprising an elastic element which is conductive and arranged in the insertion hole, and the elastic element is configured for connecting the conductive terminal to the connecting device.

13. The connector assembly according to claim 12, wherein the elastic element is arranged between an inner wall of the insertion hole and the other one of the connecting device and the conductive terminal which is located in the insertion hole.

14. The connector assembly according to claim 13, wherein the elastic element is a crown spring.

15. The connector assembly according to claim 1, wherein
the conductive terminal and the connecting device are coupled to each other in a rotatable manner; or,
the conductive terminal and the connecting device are fixedly connected to each other.

16. The connector assembly according to claim 1, further comprising:
a temperature sensor configured for detecting a temperature of the conductive terminal and/or a temperature of the connecting device.

17. The connector assembly according to claim 16, further comprising:
a controller which is connected to the temperature sensor and configured to send an alarm signal.

18. A connecting structure, comprising:
a cabinet,
a circuit board arranged inside the cabinet, and
the connector assembly according to any one of claims 1 to 17.

19. The connecting structure according to claim 18, wherein the circuit board is parallel or perpendicular to a cabinet front plate of the cabinet.
